# EUROPÄISCHE PATENTANMELDUNG

(11) **EP 1 630 536 A1**
(43) Veröffentlichungstag der Anmeldung: **01.03.2006**
(21) Anmeldenummer: 04020024.8
(22) Anmeldetag: 24.08.2004
(51) Int. Cl.: G01L 13/00, G01L 15/00, G01L 19/00, G01L 19/14, G01M 17/08

(54) **Verfahren und Vorrichtung zur Messung aerodynamischer Lasten bei Vorbeifahrt von Fahrzeugen**

(71) Anmelder: Deutsche Bahn AG, 10785 Berlin (DE)
(72) Erfinder: Deeg, Peter, 80801 München (DE); Eisenlauer, Martin, 82054 Sauerlach (DE); Franck, Daniel, 80634 München (DE); Heine, Christoph, Dr., 80995 München (DE)
(74) Vertreter: Zinken-Sommer, Rainer

(57) **Zusammenfassung**

Die Erfindung betrifft ein Verfahren und eine Vorrichtung zur Messung aerodynamischer Lasten, die bei einer Vorbeifahrt eines Fahrzeuges, insbesondere eines Zuges, an einer nahe der Fahrbahn bzw. dem Gleis befindlichen Person oder einem Objekt auftreten.

Erfindungsgemäß werden die aerodynamischen Lasten direkt gemessen, indem der auf die Oberfläche eines zylinderartigen Körpers wirkende Luftdruck bzw. dessen zeitliche Änderungen erfasst und aufgezeichnet werden.

Das Druckmesssystem besteht im einfachsten Zustand aus:
- einem zylinderartigen Körper (1), insbesondere mit einer Geometrie gemäß TSI 4.2.13. Der Körper kann jedoch auch jede beliebige andere Geometrie aufweisen.
- mehreren Öffnungen (5) auf der Oberfläche des Zylinders, die insbesondere als Bohrungen ausgeführt sind,
- jeweils einem Drucksensor an jeder Öffnung.
- einer Datenerfassung und -auswertung.

## Beschreibung

Die Erfindung betrifft ein Verfahren und eine Vorrichtung zur Messung aerodynamischer Lasten, die bei einer Vorbeifahrt eines Fahrzeuges, insbesondere eines Zuges, an einer nahe der Fahrbahn bzw. dem Gleis befindlichen Person oder einem Objekt auftreten.

In den technischen Spezifikationen für Interoperabilität (TSI) im Hochgeschwindigkeitsschienenverkehr, Abschnitt 4.2.13 (siehe EU-Richtlinie 96/48/EG über die Interoperabilität des transeuropäischen Hochgeschwindigkeitsbahnsystems) werden Anforderungen an Schienenfahrzeuge gestellt bezüglich der aerodynamischen Lasten, die diese bei Vorbeifahrt auf Personen im Gleis induzieren. Die aerodynamischen Lasten sind Druckwechsel (Bugwelle) und Strömungskräfte (Grenzschicht des Zuges, Nachlaufströmung). Für die Zwecke der Messung wird eine "Person" durch einen zylindrischer Ersatzkörper repräsentiert. In dem Regelwerk TSI wird daher ein Messsystem gefordert, das die Kräfte misst, die bei Zugvorbeifahrt auf einen definierten zylindrischen Ersatzkörper einwirken. Die auftretenden Kräfte sind hierbei instationär, d.h. zeitlich veränderlich bezüglich Richtung und Betrag.

Als Stand der Technik sind verschiedene technische Umsetzungen dieses Messsystems bekannt und bei der Deutschen Bahn AG, der französischen Staatsbahn SNCF und anderen europäischen Bahnen im Einsatz. Alle diese bisher verwendeten Messsysteme nutzen Kraftmesszellen oder Dehnungsmessstreifen für die Erfassung der aerodynamischen Lasten. Die Kräfte werden in einer Ausführungsform mit Kraftmesszellen zwischen dem zylindrischen Ersatzkörper und einer Aufständerung des zylindrischen Ersatzkörpers durch horizontal angreifende Kraftmesszellen gemessen. Eine weitere Ausführungsform misst mittels Dehnungsmessstreifen eine Verformung der zentralen Stütze der Aufständerung des zylindrischen Ersatzkörpers und erlaubt so die Bestimmung der horizontalen Kräfte auf den zylindrischen Ersatzkörper. Ein Nachteil dieser Technik ist die störende Eigendynamik dieser Systeme, d.h. die zu messenden aerodynamischen Kräfte werden durch Trägheitskräfte des Messsystems beeinträchtigt und bedürfen ggf. aufwändiger Dämpfungssysteme.

Es ist somit Aufgabe der Erfindung ein Verfahren und eine Vorrichtung zur Messung aerodynamischer Lasten auf eine nahe der Fahrbahn bzw. dem Gleis befindliche Person oder ein Objekt anzugeben, bei dem störende Einflüsse eines Messsystems ohne aufwändige konstruktive Änderungen am verwendeten Messsystem minimiert werden.

Diese Aufgabe wird erfindungsgemäß für das Verfahren durch die in Anspruch 1 angegebenen Merkmale sowie für die Vorrichtung durch die in Anspruch 3 angegebenen Merkmale gelöst.

Erfindungsgemäß werden die aerodynamischen Lasten direkt gemessen, indem der auf die Oberfläche eines zylinderartigen Körpers wirkende Luftdruck bzw. dessen zeitliche Änderungen erfasst und aufgezeichnet werden.

Besonderer Vorteil der Erfindung ist, dass der zylinderartige Körper zum Schutz gegen Umfallen sowie störender Eigenbewegungen in allen Raumrichtungen mechanisch fest verspannt werden kann. Denn diese mechanische Verspannung hat keinen Einfluss auf Messergebnisse des Luftdruckes an der Oberfläche des zylinderartigen Körpers.

Insbesondere wird nach Anspruch 2 entsprechend der technischen Spezifikationen für Interoperabilität (TSI) der Luftdruck an der Oberfläche des zylinderartigen Körpers in horizontaler Richtung erfasst und aufgezeichnet.

Anspruch 3 beinhaltet eine Vorrichtung zur Durchführung des Verfahrens aus Anspruch 2. Hierbei ist in der Oberfläche des zylinderartigen Körpers mindestens eine Öffnung vorhanden, an die mindestens ein Drucksensor angeschlossen ist. Eine Datenerfassungsanlage zeichnet die Messdaten des mindestens einen Drucksensors auf, speichert diese ab und ermittelt die Kräfte in mindestens einer Raumrichtung oder einer Raumebene, insbesondere in drei senkrecht aufeinanderstehenden Raumrichtungen oder Raumebenen.

Das Druckmesssystem besteht somit im einfachsten Zustand aus:
- einem zylinderartigen Körper, insbesondere mit einer Geometrie gemäß TSI 4.2.13. Der Körper kann jedoch auch jede beliebige andere Geometrie aufweisen.
- mehreren Öffnungen auf der Oberfläche des Zylinders. Diese Öffnungen sind insbesondere als Bohrungen ausgeführt, insbesondere in der Form einer "Bauchbinde" um den zylinderartigen Körper mit insbesondere 18 Bohrungen, wobei die Anzahl der Bohrungen die Messgenauigkeit beeinflusst,
- jeweils einem Drucksensor an jeder Öffnung. Bei der Ausführungsform der Öffnungen als Bohrungen sind die Drucksensoren vorteilhaft am dem Abschluss der Bohrung angebracht, der sich an der inneren Seite der Wandung des zylindrischen Körpers befindet.
- einer Datenerfassung und -auswertung, die insbesondere einen Analog/Digital-Wandler sowie ein EDV-Programm zur Bestimmung der Kräfte auf den zylinderartigen Körper in bevorzugt horizontaler Ebene umfasst.

Bei einer vorteilhaften Verwendung von Differenzdruckgebern als Drucksensor gemäß Anspruch 4, herrscht auf dessen "negativer" Seite ein konstanter Referenzdruck. Dieser wird insbesondere durch einen langen Schlauch bereitgestellt, der zu einem entfernt stehenden Gefäß führt. Dieses Gefäß speichert einen ungestörten, d.h. von der Vorbeifahrt unbeeinflussten, Umgebungsdruck.

Vorteilhaft ist in den Ansprüchen 5 bis 7 eine Vorrichtung vorgesehen um Ansammlungen von Feuchtigkeit, die Messergebnisse der Drucksensoren negativ beeinflusst, aus dem Raum zwischen Öffnung und Drucksensor zu entfernen. Diese Feuchtigkeit ist insbesondere Regen, Kondenswasser oder Nebel, der durch Schmutzpartikel, Adhäsion oder eine Kapillarwirkung in den Öffnungen gehalten wird.

Nach Anspruch 5 wird dieses Feuchtigkeitsproblem durch zeitweises Einblasen von trockener Luft in den Raum zwischen Öffnung und Drucksensor gelöst. Insbesondere ist zwischen Öffnung und Drucksensor eine zusätzliche Druckluftöffnung mit einem Ventil geschaltet, durch die trockene Luft aus einem Druckbehälter in den Raum zwischen Öffnung und Drucksensor eingeblasen wird, die daraufhin die Feuchtigkeit aus diesem Raum verdrängt.

Nach Anspruch 6 ist im Bereich der Öffnung ein Heizelement angebracht. Dieses erwärmt den Raum zwischen Öffnung und Drucksensor, so dass die Feuchtigkeit verdampft oder verdunstet und durch Konvektion aus dem Raum ausgetrieben wird.

Nach Anspruch 7 ist im Bereich des Drucksensors ein Schalldruckerzeuger angebracht, der Schalldruckimpulse oder Schallwellen in den Raum zwischen Öffnung und Drucksensor einbringt. Diese lösen durch ihre Vibrationen, deren Frequenzbereich insbesondere den Ultraschallbereich umfasst, die Feuchtigkeit von der Wandung des Raumes zwischen Öffnung und Drucksensor und transportieren diese aus dem Raum hinaus in die Umgebung. Als Schalldruckerzeuger kommen hierbei insbesondere piezoelektrische Lautsprecher zur Anwendung.

Vorteilhaft werden gemäß Anspruch 8 Absolutdrucksensoren als Drucksensoren verwendet. Ein Absolutdrucksensor weist auf der "negativen" Seite einen konstanten Druck durch ein Luftvolumen auf, das in einem kleinen Volumen fest eingeschlossen ist.

Weitere vorteilhafte Drucksensoren sind nach Anspruch 9 Oberflächendrucksensoren, deren Druckmembran insbesondere bündig mit der Oberfläche des zylindrischen Körpers abschließt, z.B. in Form einer auf die Oberfläche des zylindrischen Körpers aufgebrachten Piezofolie. Hierdurch entfällt die Öffnung, in die Feuchtigkeit und/oder Schmutzpartikel eindringen kann, so dass keine Beeinträchtigung der Messung durch diese Feuchtigkeit und/oder Schmutzpartikel auftreten kann.

Die Erfindung ist insbesondere anwendbar auf eine Vorbeifahrt von Schienenfahrzeugen, Straßenfahrzeugen oder auch auf einen Vorbeiflug von Flugzeugen an Personen oder Objekten.

Die Erfindung wird nachstehend anhand von vier Ausführungsbeispielen und einer Zeichnung mit fünf Figuren erläutert. Die Zeichnung zeigt in
- **Fig. 1**: schematisch einen zylinderartigen Körper mit Öffnungen auf der Oberfläche zur Aufnahme von Drucksensoren,
- **Fig. 2**: schematisch eine Öffnung mit einem Drucksensor,
- **Fig. 3**: schematisch eine Öffnung mit einem Drucksensor, an deren Wandung ein Heizelement angebracht ist,
- **Fig. 4**: schematisch eine Öffnung mit einem Drucksensor sowie einer Vorrichtung zum Einblasen von trockener Luft in den Raum zwischen Öffnung und Drucksensor,
- **Fig. 5**: schematisch eine Öffnung mit einem Drucksensor sowie einem Schalldruckerzeuger im Bereich des Drucksensors.

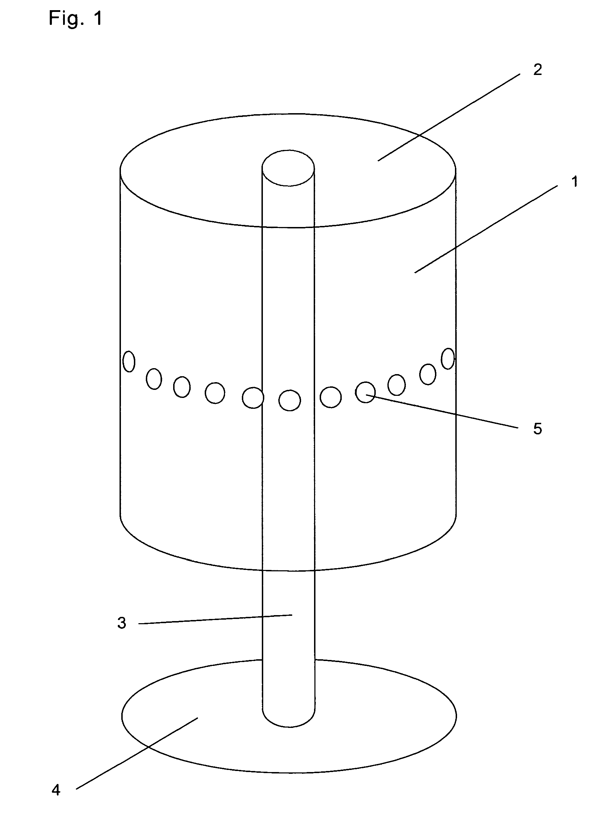

Ein besonders vorteilhaftes Ausführungsbeispiel ist in **Fig. 1** dargestellt, mit einem zylinderartigen Körper 1, der nach oben durch einen Deckel 2 abgeschlossen ist. Abmessungen des zylinderartigen Körpers 1 entsprechen insbesondere der Vorgaben der TSI, Abschnitt 4.2.13. Der Deckel 2 ist auf einer Aufständerung 3 gelagert, die wiederum auf einem Fuß 4 steht und den zylinderartigen Körper 1 gegen Umfallen sichert.

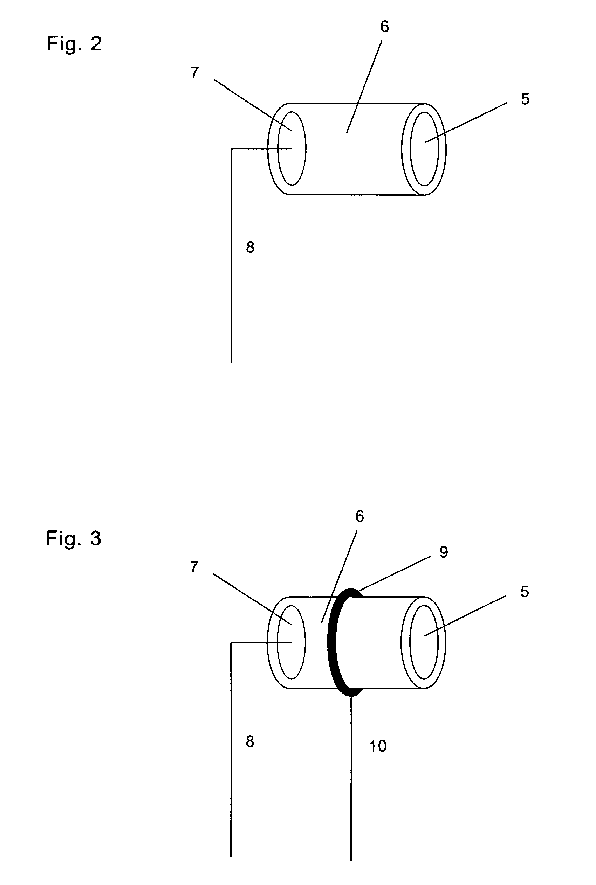

Auf der Oberfläche des zylinderartigen Körpers 1 befinden sich Öffnungen 5 zur Aufnahme von Drucksensoren 7 gemäß **Fig. 2.** Diese Öffnungen 5 sind Bohrungen in der Wandung des zylinderartigen Körpers 1, die die Wandung vollständig durchdringen. Ein Drucksensor 7 ist an dem Abschluss der Bohrung angebracht, der sich an der inneren Seite der Wandung befindet. Elektrische Anschlüsse 8 aller Drucksensoren laufen an der Aufständerung 3 zusammen und werden dort gebündelt zu einer Datenerfassungs- und Auswerteanlage geführt.

In drei folgenden Ausführungsbeispielen werden Vorrichtungen beschrieben, die Ansammlungen von Feuchtigkeit aus dem Raum zwischen Öffnung 5 und Drucksensor 7 entfernen.

In einem ersten Ausführungsbeispiel ist gemäß **Fig. 3** zwischen Öffnung 5 und Drucksensor 7 ein Heizelement 9 angebracht. Dieses erwärmt den Raum zwischen Öffnung 5 und Drucksensor 7, so dass die Feuchtigkeit verdampft oder verdunstet und durch Konvektion aus dem Raum ausgetrieben wird.

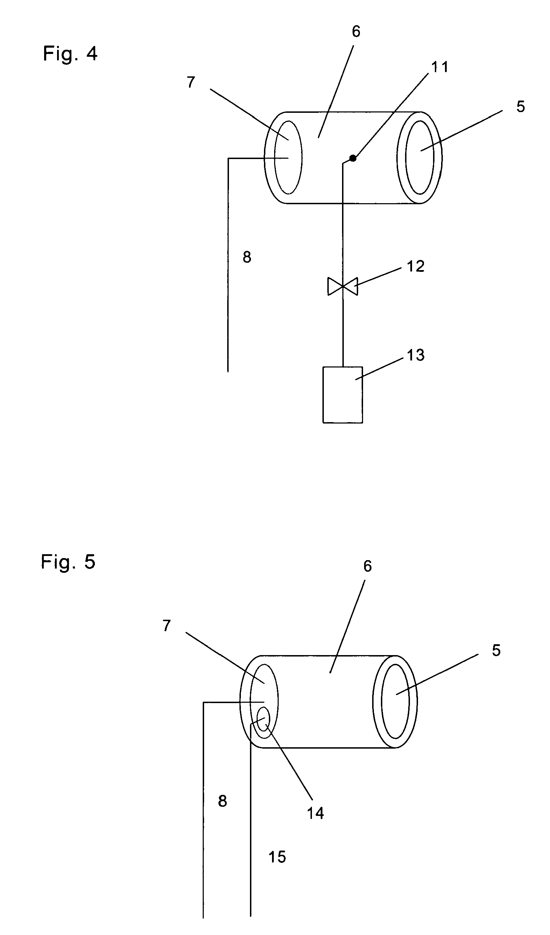

In einem zweiten Ausführungsbeispiel ist gemäß **Fig. 4** zwischen Öffnung 5 und Drucksensor 7 eine zusätzliche Druckluftöffnung 11 mit einem Ventil 12 geschaltet. Trockene Luft wird aus einem Druckbehälter 13 in den Raum zwischen Öffnung 5 und Drucksensor 7 eingeblasen und hierdurch die Feuchtigkeit aus diesem Raum verdrängt.

In einem dritten Ausführungsbeispiel ist gemäß **Fig. 5** im Bereich des Drucksensors 7 ein Schalldruckerzeuger 14 angebracht, der Schalldruckimpulse oder Schallwellen in den Raum zwischen Öffnung 5 und Drucksensor 7 einbringt. Diese lösen durch ihre Vibrationen die Feuchtigkeit von der Wandung des Raumes zwischen Öffnung 5 und Drucksensor 7 und transportieren diese aus dem Raum hinaus in die Umgebung.

### Bezugszeichen

- 1: zylinderartiger Körper
- 2: Deckel
- 3: Aufständerung
- 4: Standfuß
- 5: Öffnung
- 6: Ummantelung des Raumes zwischen Öffnung 5 und Drucksensor 7
- 7: Drucksensor
- 8: elektrischer Anschluss des Drucksensors 7
- 9: Heizelement
- 10: elektrischer Anschluss des Heizelementes 9
- 11: Druckluftöffnung
- 12: Ventil
- 13: Druckluftbehälter
- 14: Schalldruckerzeuger
- 15: elektrischer Anschluss des Schalldruckerzeugers 14

## Patentansprüche

1. Verfahren zur Messung aerodynamischer Lasten, die bei einer Vorbeifahrt eines Fahrzeuges oder eines Zuges an einer nahe der Fahrbahn bzw. dem Gleis befindlichen Person oder einem Objekt auftreten, wobei die Wirkung dieser aerodynamischen Lasten ermittelt wird durch Messung von Kräften, die auf einen zylinderartigen Körper wirken, **dadurch gekennzeichnet, dass** an mindestens einer Stelle der Oberfläche des zylinderartigen Körpers ein Luftdruck, der durch die Vorbeifahrt des Fahrzeuges oder des Zuges entsteht, erfasst und aufgezeichnet wird.

2. Verfahren zur Messung aerodynamischer Lasten nach Anspruch 1, **dadurch gekennzeichnet, dass** der Luftdruck an der Oberfläche des zylinderartigen Körpers in horizontaler Richtung erfasst und aufgezeichnet wird.

3. Vorrichtung zur Messung aerodynamischer Lasten, die bei einer Vorbeifahrt eines Fahrzeuges oder eines Zuges an einer nahe der Fahrbahn bzw. dem Gleis befindlichen Person oder einem Objekt auftreten, wobei die Wirkung dieser aerodynamischen Lasten ermittelt wird durch Messung von Kräften, die auf einen zylinderartigen Körper wirken, **dadurch gekennzeichnet, dass** auf der Oberfläche des zylinderartigen Körpers mindestens eine Öffnung vorhanden ist, an die mindestens ein Drucksensor angeschlossen ist, der mit einer Datenerfassungsanlage zur Aufzeichnung und Speicherung sowie zur Kraftermittlung in mindestens einer Raumrichtung oder einer Raumebene aus den Messdaten des mindestens einen Drucksensors verbunden ist.

4. Vorrichtung zur Messung aerodynamischer Lasten nach Anspruch 3, **dadurch gekennzeichnet, dass** der Drucksensor ein Differenzdrucksensor ist.

5. Vorrichtung zur Messung aerodynamischer Lasten nach mindestens einem der Ansprüche 3 und 4, **dadurch gekennzeichnet, dass** zwischen dem Drucksensor und der Öffnung eine Druckluftöffnung angebracht ist, über die trockene Luft in den Raum zwischen Öffnung und Drucksensor einleitbar ist.

6. Vorrichtung zur Messung aerodynamischer Lasten nach mindestens einem der Ansprüche 3 und 4, **dadurch gekennzeichnet, dass** zur Erwärmung des Raum zwischen Öffnung und Drucksensor im Bereich der Öffnung ein Heizelement angebracht ist.

7. Vorrichtung zur Messung aerodynamischer Lasten nach mindestens einem der Ansprüche 3 und 4, **dadurch gekennzeichnet, dass** zur Einleitung eines Schalldruckimpulses oder von Schallwellen in den Raum zwischen Öffnung und Drucksensor ein Schalldruckerzeuger im Bereich des Drucksensors angebracht ist.

8. Vorrichtung zur Messung aerodynamischer Lasten nach Anspruch 3, **dadurch gekennzeichnet, dass** der Drucksensor ein Absolutdrucksensor ist.

9. Vorrichtung zur Messung aerodynamischer Lasten nach Anspruch 3, **dadurch gekennzeichnet, dass** der Drucksensor ein Oberflächendrucksensor ist.
